(19) **Europäisches Patentamt / European Patent Office / Office européen des brevets**

(11) **EP 2 056 615 A1**

(12) **EUROPEAN PATENT APPLICATION**
published in accordance with Art. 153(4) EPC

(43) Date of publication:
**06.05.2009 Bulletin 2009/19**

(51) Int Cl.:
*H04Q 7/38* (0000.00)  *H04B 1/707* (2006.01)
*H04J 1/00* (2006.01)  *H04J 11/00* (2006.01)

(21) Application number: **07792468.6**

(22) Date of filing: **13.08.2007**

(86) International application number:
**PCT/JP2007/065825**

(87) International publication number:
**WO 2008/023598 (28.02.2008 Gazette 2008/09)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **22.08.2006 JP 2006225917**

(71) Applicant: **NTT DoCoMo, Inc.**
**Chiyoda-ku**
**Tokyo 100-6150 (JP)**

(72) Inventors:
• **KISHIYAMA, Yoshihisa**
  **Tokyo 100-6150 (JP)**
• **HIGUCHI, Kenichi**
  **Tokyo 100-6150 (JP)**
• **SAWAHASHI, Mamoru**
  **Tokyo 100-6150 (JP)**

(74) Representative: **HOFFMANN EITLE**
**Patent- und Rechtsanwälte**
**Arabellastrasse 4**
**81925 München (DE)**

(54) **BASE STATION, MOBILE STATION, AND PILOT CHANNEL GENERATION METHOD**

(57) A base station for generating pilot channels which are orthogonal among N (N>=4) sectors, includes a sequence generating unit configured to generate a phase rotation sequence which specifies the amount of phase rotation for each sector in a frequency domain such that there is more than 2π/N difference between the amount of phase rotation applied in each sector and that applied in its adjacent sectors; and an orthogonal sequence multiplying unit configured to apply the corresonding amount of phase rotation in the frequency domain, which is selected from the phase rotation sequence, to one of the pilot channels in each sector.

**EP 2 056 615 A1**

## Description

## TECHNICAL FIELD

The present invention relates to a base station, a mobile station, and a method of generating pilot channels. Specifically, the present invention relates to a technology for generating pilot channels in a base station with N (N>=4) sectors.

## BACKGROUND ART

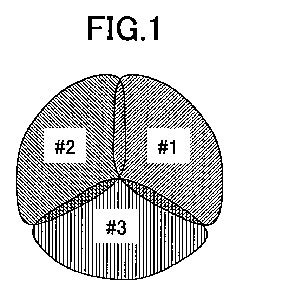

Fig. 1 shows a typical sector configuration used in a mobile communication system. Three directional antennas are installed in a base station, thereby a cell is formed by three sectors.

In order to communicate between a mobile station and the base station with multiple sectors, a pilot channel is used. The pilot channel is used for multiple mobile stations in common to demodulate a control channel. Specifically, the pilot channel is used for channel estimation, synchronous detection, measurement of received signal quality, and so on (see "W-CDMA MOBILE COMMUNICATIONS SYSTEM" edited by Keiji Tachikawa, Japan, March 15, 2002, pages 100-101).

When the base station supports multiple sectors, a sector-specific orthogonal sequence is used for the pilot channel in order to reduce interference from other sectors. In the case of two sectors, for example, one orthogonal sequence of {1,1} is used in a sector #1 and another orthogonal sequence of {1, -1} is used in a sector #2 in order to reduce interference from other sectors.

## DISCLOSURE OF INVENTION

[PROBLEM(S) TO BE SOLVED BY THE INVENTION]

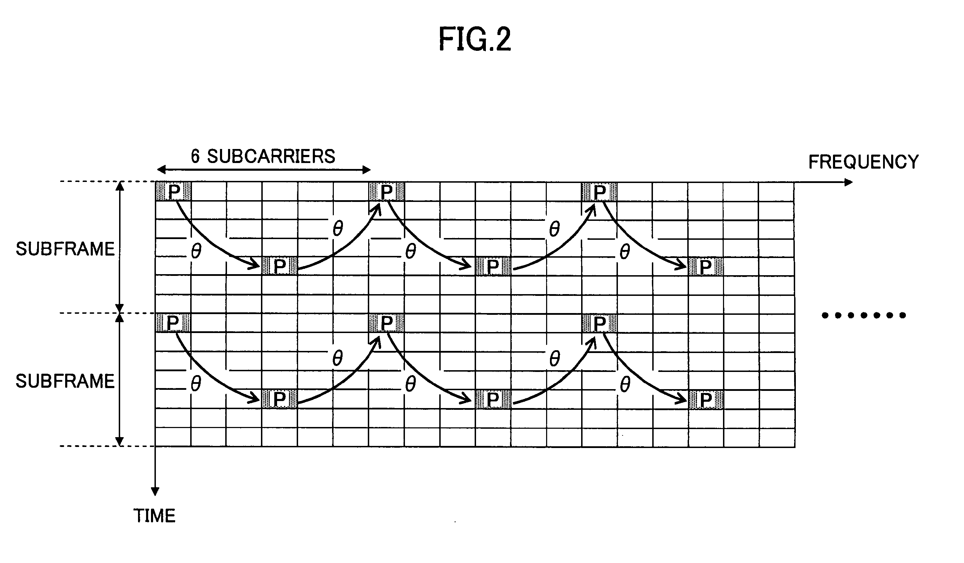

Fig. 2 shows a transmission pattern for the pilot channel which is under discussion in 3GPP (The 3rd Generation Parnership Project). Radio resources are allocated to the pilot channel using a predetermined pattern. For example, radio resources are allocated to the pilot channel in first and fifth subframes at six-subcarrier intervals (radio resources shown as "P" are allocated).

Orthogonalization of pilot channels among sectors can be achieved by applying a phase rotation sequence, which specifies the amount of phase rotation which differs from one sector to another, to each pilot channel. For example, in the case of a three-sector configuration shown in Fig. 1, the following phase rotation sequence is used.

$$\theta = \begin{cases} 0 & (\text{sector \#1}) \\ 2\pi/3 & (\text{sector \#2}) \\ 4\pi/3 & (\text{sector \#3}) \end{cases}$$

Specifically, 0 of phase rotation is applied in the sector #1, 2π/3 of phase rotation is applied in the sector #2, and 4π/3 of phase rotation is applied in the sector #3. When the amount of phase rotation is applied in this manner, interference from other sectors can be reduced by combining (adding) three symbols on the pilot channel. This corresponds to spreading the pilot channel with the spreading factor of three. Similarly, in order to achieve orthogonalization among six sectors, the following phase rotation sequence is used.

$$\theta = \begin{cases} 0 & (\text{sector \#1}) \\ \pi/3 & (\text{sector \#2}) \\ 2\pi/3 & (\text{sector \#3}) \\ \pi & (\text{sector \#4}) \\ 4\pi/3 & (\text{sector \#5}) \\ 5\pi/3 & (\text{sector \#6}) \end{cases}$$

In summary, when the number of sectors is equal to N, a phase rotation sequence is used in which there is 2π/N difference between the amount of phase rotation applied in each sector and the amount of phase rotation applied in its adjacent sectors. Orthogonalization of the pilot channels can be achieved by applying such a phase rotation sequence to the pilot channel in each sector. With the increase of the number of sectors, the number of symbols required for orthogonalization increases. In other words, the spreading factor becomes larger.

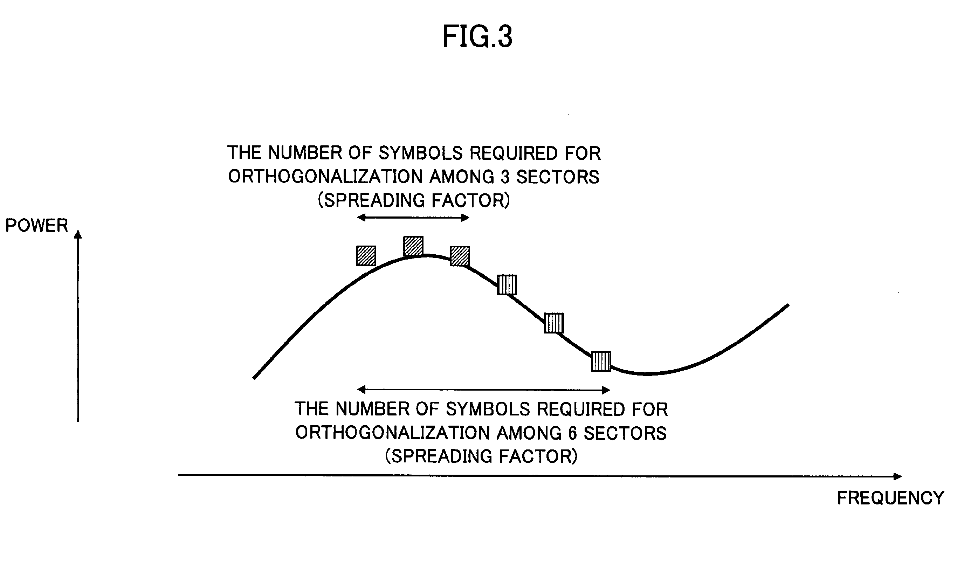

Fig. 3 shows in the frequency axis the number of symbols required for orthogonalization among three sectors and among six sectors. As shown in Fig. 3, the number of symbols required for orthogonalization among six sectors is twice as large as that required for orthogonalization among three sectors.

When the number of symbols required for orthogonalization increases with the increase of the number of sectors, amplitude fluctuations among symbols may become large due to frequency selective fading, as shown in Fig. 2. Because of the amplitude fluctuations, orthogonalization may be lost and inter-sector interference may occur.

In view of the aforementioned problem in the related art, it is a general object of the present invention to reduce effects of frequency selective fading and reduce inter-sector interference of the pilot channels, particularly when the number of sectors is greater than or equal to four.

[MEANS FOR SOLVING THE PROBLEM(S)]

In one aspect of the present invention, there is provided a base station for generating pilot channels which are orthogonal among N (N>=4) sectors, including:

a sequence generating unit configured to generate a phase rotation sequence which specifies the amount of phase rotation for each sector in a frequency domain such that there is more than 2π/N difference between the amount of phase rotation applied in each sector and that applied in its adjacent sectors; and
an orthogonal sequence multiplying unit configured to apply the corresponding amount of phase rotation in the frequency domain, which is selected from the phase rotation sequence, to one of the pilot channels in each sector.

In another aspect of the present invention, there is provided a mobile station for receiving a signal on a pilot channel from a base station with N (N>=4) sectors; including:

a channel estimating unit configured to perform channel estimation using a phase rotation sequence which specifies the amount of phase rotation in a frequency domain such that there is more than 2π/N difference between the amount of phase rotation applied in each sector and that applied in its adjacent sectors.

In another aspect of the present invention, there is provided a method of generating pilot channels which are orthogonal among N (N>=4) sectors in a base station with the N sectors, including the steps of:

generating a phase rotation sequence which specifies the amount of phase rotation for each sector in a frequency domain such that there is more than 2π/N difference between the amount of phase rotation applied in each sector and that applied in its adjacent sectors; and
applying the corresponding amount of phase rotation in the frequency domain, which is selected from the phase rotation sequence, to one of the pilot channels in each sector.

[ADVANTAGEOUS EFFECT OF THE INVENTION]

According to an embodiment of the present invention, it is possible to reduce effects of frequency selective fading and reduce inter-sector interference of the pilot channels, when a base station supports greater than or equal to four sectors.

**BRIEF DESCRIPTION OF THE DRAWINGS**

Fig. 1 shows a typical sector configuration used in a mobile communication system.
Fig. 2 shows a transmission pattern for a pilot channel.
Fig. 3 shows comparison between the number of symbols required for orthogonalization among three sectors and that required for orthogonalization among six sectors.
Fig. 4A shows a transmission pattern for a pilot channel in accordance with a first embodiment of the present invention.
Fig. 4B shows orthogonalization among sectors in accordance with the first embodiment of the present invention.
Fig. 5A shows a transmission pattern for a pilot channel in accordance with a second embodiment of the present invention.
Fig. 5B shows orthogonalization among sectors in accordance with the second embodiment of the present invention.
Fig. 6A shows a transmission pattern for a pilot channel in accordance with a third embodiment of the present invention.
Fig. 6B shows orthogonalization among sectors in accordance with the third embodiment of the present invention.
Fig. 7A shows a transmission pattern for a pilot channel in accordance with a fourth embodiment of the present invention.
Fig. 7B shows orthogonalization among sectors in accordance with the fourth embodiment of the present invention.
Fig. 8A shows a transmission pattern for a pilot channel in accordance with a fifth embodiment of the present invention.
Fig. 8B shows orthogonalization among sectors in accordance with the fifth embodiment of the present invention.
Fig. 9 shows a structure of a base station in accordance with an embodiment of the present invention.
Fig. 10 shows a structure of a mobile station in accordance with an embodiment of the present invention.
Fig. 11 shows a relationship between sectors and the amount of phase rotation in accordance with the first embodiment of the present invention.
Fig. 12 shows a phase relationship to achieve orthogonalization among four sectors.
Fig. 13 shows a phase relationship to achieve orthogonalization among five sectors.

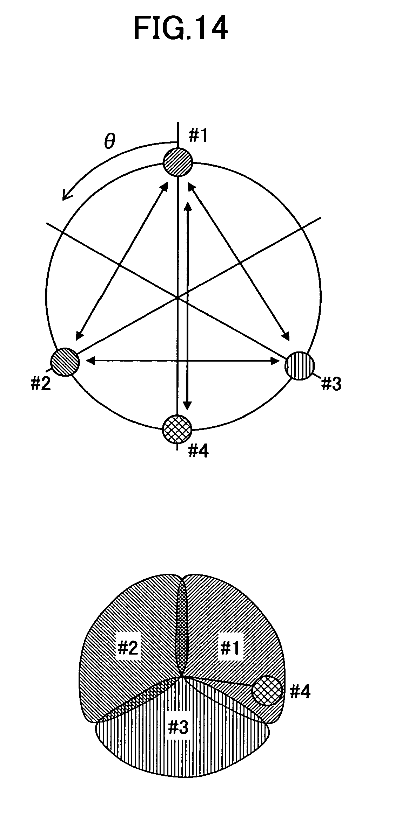

Fig. 14 shows a phase relationship to achieve orthogonalization among sectors in the presence of a hotspot cell.

## DETAILED DESCRIPTION OF THE PREFERRED EMBODIMENTS

[DESCRIPTION OF NOTATIONS]

| | |
|---|---|
| 10 | base station |
| 101 | spreading and channel coding unit |
| 103 | interleaving unit |
| 105 | data modulation unit |
| 107 | time/frequency mapping unit |
| 109 | pilot multiplexing unit |
| 111 | sequence generating unit |
| 113 | orthogonal sequence multiplying unit |
| 115 | scrambling code multiplying unit |
| 117 | IFFT unit |
| 119 | guard interval inserting unit |
| 20 | mobile station |
| 201 | guard interval removing unit |
| 203 | FFT unit |
| 205 | pilot separating unit |
| 207 | channel estimation unit |
| 209 | time/frequency data extracting unit |
| 211 | data demoduation unit |
| 213 | deinterleaving unit |
| 215 | despreading and channel decoding unit |

[BEST MODE OF CARRYING OUT THE INVENTION]

With reference to the accompanying drawings, a description is given below with regard to preferred embodiments of the present invention. Although the following embodiments mainly focus on a six-sector configuration, the present invention is applicable to any case where the number of sectors is greater than or equal to four (N>=4).

[First Embodiment]

In a first embodiment, the amount of phase rotation is assigned to each sector such that the number of symbols (spreading factor) required for orthogonalization among adjacent sectors is equal to two or three.

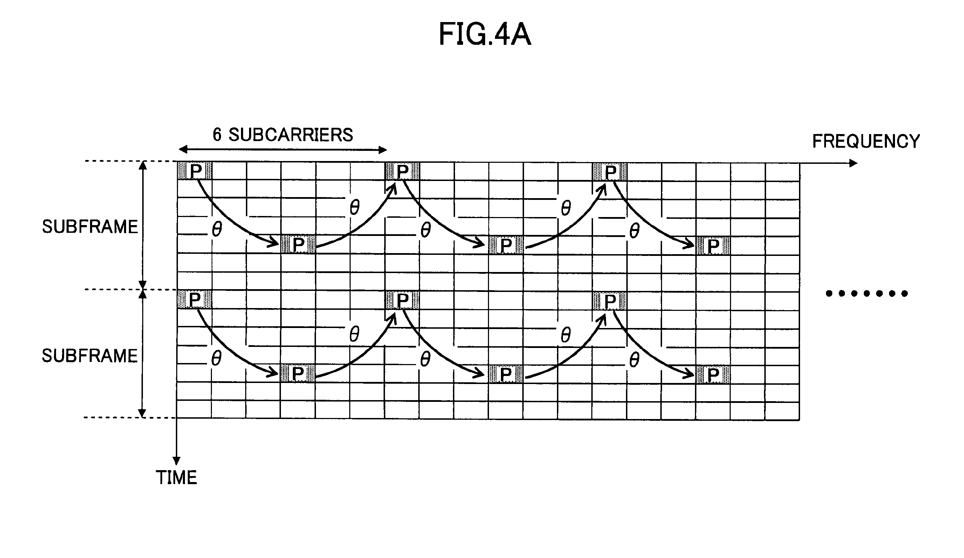

Fig. 4A shows a transmission pattern for a pilot channel in accordance with the first embodiment of the present invention. Along with this transmission pattern, the following phase rotation sequence is used which specifies the amount of phase rotation which differs from one sector to another.

$$\theta = \begin{cases} 0 & (\text{sector \#1}) \\ 2\pi/3 & (\text{sector \#2}) \\ 4\pi/3 & (\text{sector \#3}) \\ \pi/3 & (\text{sector \#4}) \\ 5\pi/3 & (\text{sector \#5}) \\ \pi & (\text{sector \#6}) \end{cases}$$

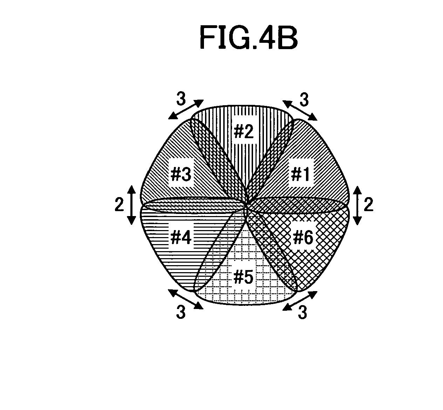

In this manner, the difference between the amount of phase rotation applied in each sector and that applied in its adjacent sectors is more than $2\pi/6$ (120 degrees in this example). With the use of this phase rotation sequence, orthogonalization among adjacent sectors can be achieved with two or three symbols, although six symbols are required to calculate orthogonalization for all the sectors in the base station. For example, orthogonalization between the sector #1 and the sector #2 can be acieved with three symbols, since the difference between the amount of phase rotation in the sector #1 and that of the sector #2 is equal to $2\pi/3$. In other words, a mobile station situated at the sector boundary between the sector #1 and the sector #2 can detect the pilot channel using three symbols rather than six symbols. Similarly, orthogonalization between the sector #1 and the sector #6 can be acieved with two symbols, since the difference between the amount of phase rotation in the sector #1 and that of the sector #6 is equal to $\pi$. On the other hand, six symbols are required for orthogonalization between the sector #1 and the sector #4, since the difference between the amount of phase rotation in the sector #1 and that of the sector #4 is equal to $\pi/3$. However, interference between the sector #1 and the sector #4 is negligible, since the sector #1 is not adjacent to the sector #4. In summary, although the number of spreading factors for all the sectors in the base station is equal to 6, the number of spreading factors required for orthogonalization among adjacent sectors can be reduced to two or three. According to the first embodiment, orthogonalization among sectors can be achieved with the spreading factors shown in Fig. 4B.
Although the number of spreading factors for all the sectors remains to be large, the number of spreading factors required for orthogonalization among adjacent sectors can be reduced, thereby effects of frequency selective fading can be reduced.

[Second Embodiment]

In a second embodiment, both the amount of phase rotation in the frequency domain and the amount of phase rotation in the time domain are used.

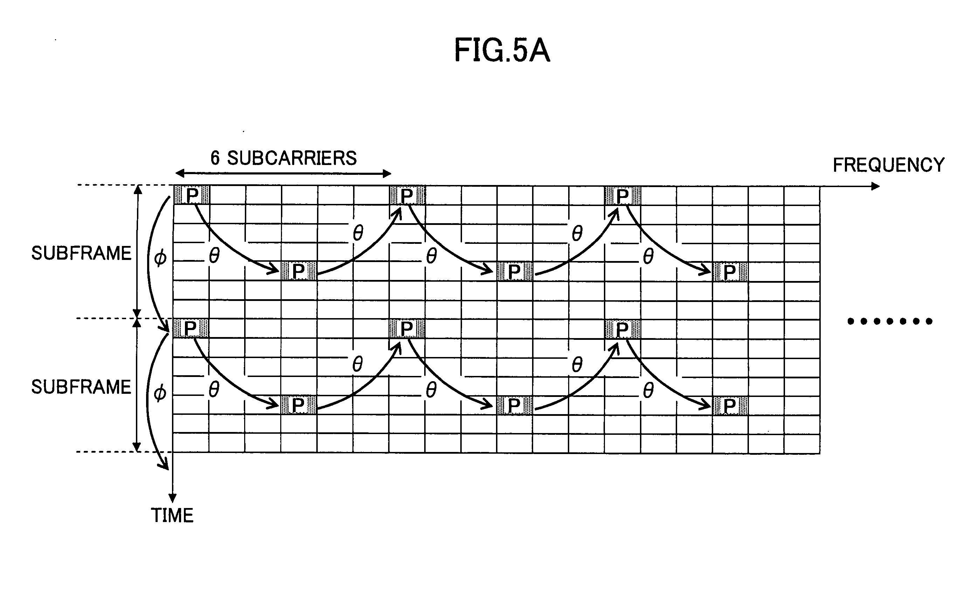

Fig. 5A shows a transmission pattern for a pilot channel in accordance with the second embodiment of the present invention. Along with this transmission pattern, the following phase rotation sequence is used which specifies the amount of phase rotation in the frequency domain and the amount of phase rotation in the time domain for each sector.

$$(\theta, \phi) = \begin{cases} (0,0) & (\text{sector \#1}) \\ (2\pi/3, 0) & (\text{sector \#2}) \\ (4\pi/3, 0) & (\text{sector \#3}) \\ (0, \pi) & (\text{sector \#4}) \\ (2\pi/3, \pi) & (\text{sector \#5}) \\ (4\pi/3, \pi) & (\text{sector \#6}) \end{cases}$$

The use of the amount of orthogonal phase rotation in the time domain allows for the use of the phase rotation sequence designed for three sectors in the frequency domain.

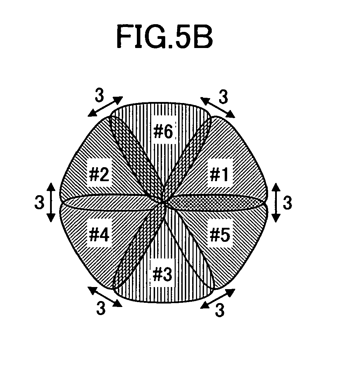

In addition, the amount of phase rotation may be determined such that sectors (for example, the sector #1 and the sector #4) with the same amount of phase rotation in the frequency domain are not adjacent to each other. This allows orthogonalization to be calculated typically by combining (adding) symbols in the frequency domain. Specifically, orthogonalization between the sector #1 and the sector #6 can be achieved with three symbols without consideration of the amount of phase rotation in the time domain, since the difference between the amount of phase rotation in the sector #1 and that of the sector #6 is equal to 4π/3. Similarly, orthogonalization between the sector #1 and the sector #5 can be achieved with three symbols without consideration of the amount of phase rotation in the time domain, since the difference between the amount of phase rotation in the sector #1 and that of the sector #5 is equal to 2π/3. According to the second embodiment, orthogonalization among sectors can be achieved with the spreading factors shown in Fig. 5B.

In this manner, effects of frequency selective fading can be reduced with the use of the amount of phase rotation in the time domain.

[Third Embodiment]

In a third embodiment, the amount of phase rotation is assigned to each sector such that the amount of phase rotation applied in each sector is different from that applied in its adjacent sectors.

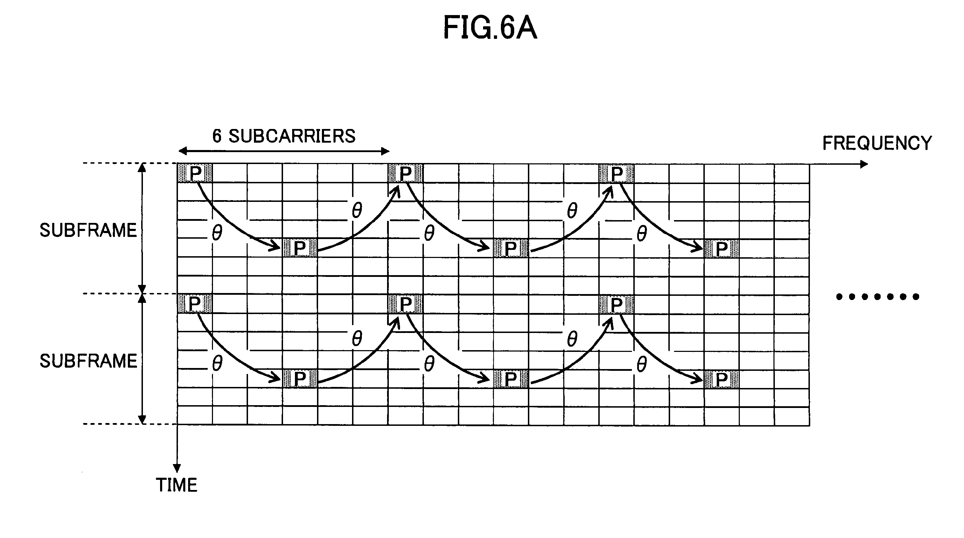

Fig. 6A shows a transmission pattern for a pilot channel in accordance with the third embodiment of the present invention. Along with this transmission pattern, the following phase rotation sequence is used in which the amount of phase rotation applied in each sector is different from that applied in its adjacent sectors.

$$\theta = \begin{cases} 0 & (\text{sector \#1, \#4}) \\ 2\pi/3 & (\text{sector \#2, \#5}) \\ 4\pi/3 & (\text{sector \#3, \#6}) \end{cases}$$

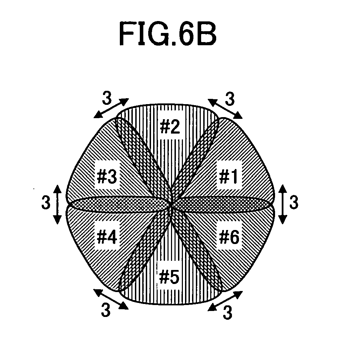

With the use of the phase rotation sequence, orthogonalization between the sector #1 and the sector #2 can be achieved with three symbols, since the difference between the amount of phase rotation in the sector #1 and that of the sector #2 is equal to 2π/3. Similarly, orthogonalization between the sector #1 and the sector #6 can be acieved with three symbols, since the difference between the amount of phase rotation in the sector #1 and that of the sector #6 is equal to 4π/3. Although the same amount of phase rotation is applied in the sector #1 and the sector #4, interference between the sector #1 and the sector #4 is negligible, since the sector #1 is not adjacent to the sector #4. According to the third embodiment, orthogonalization among sectors can be achieved with the spreading factors shown in Fig. 6B.

With the use of the phase rotation sequence in which the amount of phase rotation in one sector is different from that of its adjacent sectors, the number of spreading factors required for orthogonalization among adjacent sectors can be reduced, thereby effects of frequency selective fading can be reduced.

[Fourth Embodiment]

In a fourth embodiment, the base station groups the sectors and uses a scrambling code which differs from one group to another.

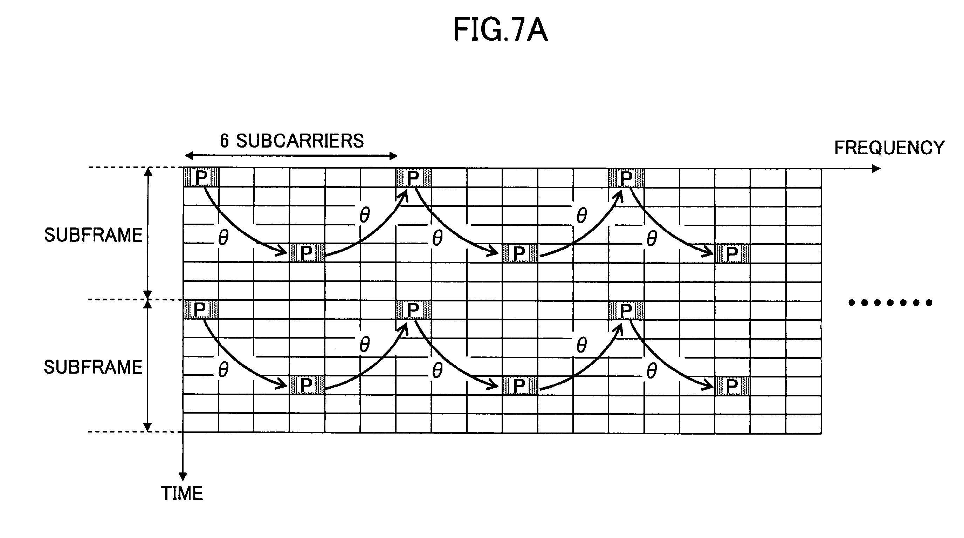

Fig. 7A shows a transmission pattern for a pilot channel in accordance with the fourth embodiment of the present invention. Along with this transmission pattern, the following phase rotation sequence is used.

$$\theta = \begin{cases} 0 & (\text{sector \#1, \#4}) \\ 2\pi/3 & (\text{sector \#2, \#5}) \\ 4\pi/3 & (\text{sector \#3, \#6}) \end{cases}$$

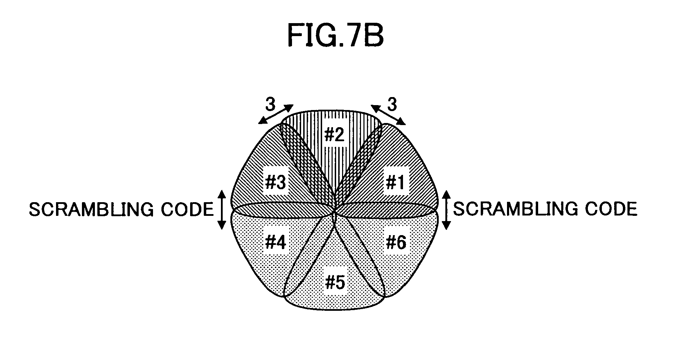

In the fourth embodiment, the sectors #1-#3 and the sectors #4-#6 are grouped together, respectively. The base station uses (multiplies) the scrambling code which differs from one group to another. One scrambling code A is used in the sectors #1-#3 and another scrambling code B is used in the sectors #4-#6. With the use of the different scrambling codes, orthogonalization among the sectors #1-#3 can be achieved with three symbols without consideration of interference from the sectors #4-#6. According to the fourth embodiment, orthogonalization among sectors can be achieved with the spreading factors shown in Fig. 7B.

In this manner, effects of frequency selective fading can be reduced by grouping sectors and using a scrambling code which differs from one group to another.

[Fifth Embodiment]

In a fifth embodiment, the base station groups the sectors and multiplexes pilot channels into a set of resource blocks which differs from one group to another.

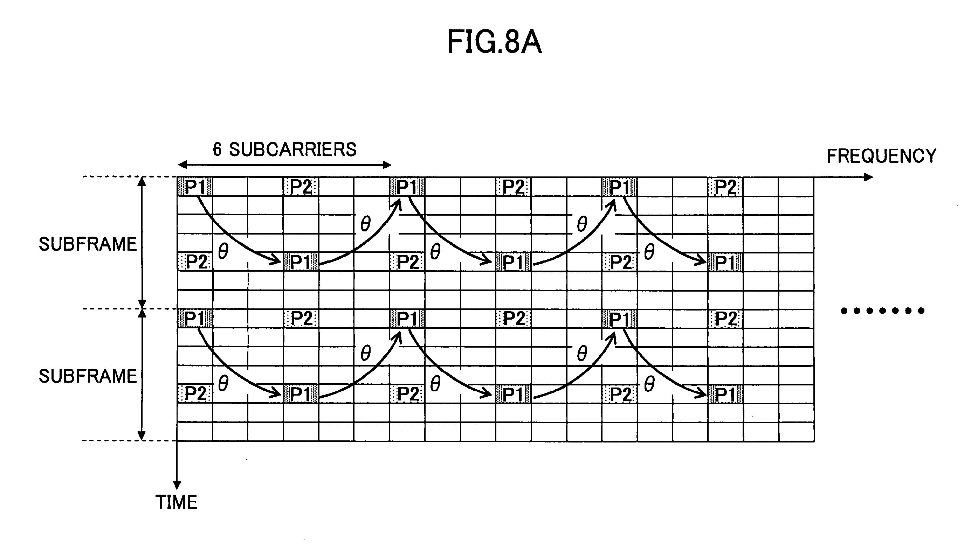

Fig. 8A shows a transmission pattern for a pilot channel in accordance with the fourth embodiment of the present invention. The pilot channels in the sectors #1-#3 use radio resources "P1" and the pilot channels in the sectors #4-#6 use radio resources "P2" , which are different from "P1". By grouping sectors in this manner, allocating the pilot channels to a set of radio resources which differs from one group to another, and frequency-multiplexing them, the sectors #1-#3 need not consider interference from the sectors #4-#6. Consequently, the following phase rotation sequence can be used in the sectors #1-#3.

$$\theta = \begin{cases} 0 & (\text{sector \#1}) \\ 2\pi/3 & (\text{sector \#2}) \\ 4\pi/3 & (\text{sector \#3}) \end{cases}$$

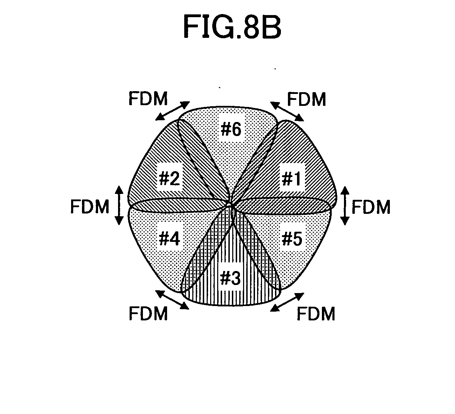

According to the fifth embodiment, orthogonalization among the sectors #1-#3 can be achieved without consideration of interference from the sectors #4-#6. Accordingly, orthogonalization among sectors can be achieved with the spreading factors shown in Fig. 8B.

It should be noted that any combination of the first through fifth embodiments can be used.

[Structure of Base Station]

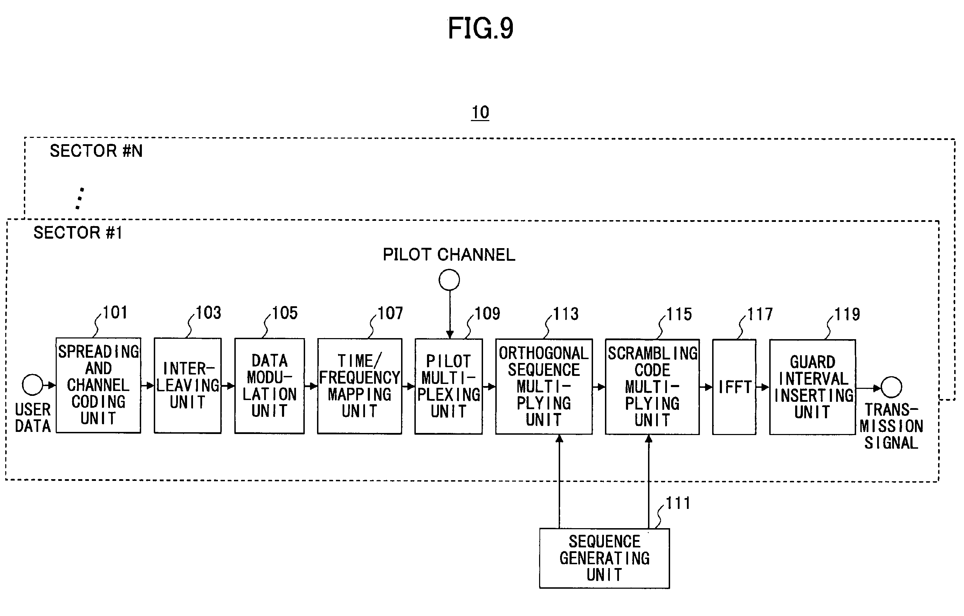

Fig. 9 shows an example structure of a base station 10 for implementing one of the aforementioned embodiments. The base station 10 includes a spreading and channel coding unit 101, an interleaving unit 103, a data modulation unit 105, a time/frequency mapping unit 107, a pilot multiplexing unit 109, a sequence generating unit 111, an orthogonal sequence multiplying unit 113, a scrambling code multiplying unit 115, an IFFT (Inverse Fast Fourier Transform) unit 117, and a guard interval inserting unit 119. The sequence generating unit 111 is used in common in multiple sectors, since the sequence generating unit 111 generates a phase rotation sequence applied in each sector. The other components are implemented for each sector as shown in Fig. 9.

The spreading and channel coding unit 101 performs channel coding on the data channel to be trans

mitted, thereby enhancing the error correction capability. It should be noted that code spreading is not performed in this example because the OFDM scheme is employed. However, when an OFCDM (Orthogonal Frequency and Code Division Multiplexing) scheme is employed in other examples, the spreading and channel coding unit 101 performs both channel coding and code spreading on the data channel to be transmitted. The interleaving unit 103 changes the order of symbols of the channel-coded signal in the time direction and/or the frequency direction in accordance with a predetermined rule known by the transmitter and its corresponding receiver. The data modulation unit 105 maps the transmission signal in a signal constellation in accordance with an appropriate modulation scheme. For example, various modulation schemes such as QPSK, 16QAM, 64QAM or the like may be employed. When Adaptive Modulation and Coding (AMC) scheme is employed, the modulation scheme and a channel coding rate are determined on a case-by-case basis. The time/frequency mapping unit 107 determines how the data channels to be transmitted are mapped in the time and/or the frequency direction. The pilot multiplexing unit 109 multiplexes the pilot channels, the control channels, and the data channels, and outputs the multiplexed channels. The multiplexing may be made in the time direction, in the frequency direction, or in both the time and the frequency directions.

The sequence generating unit 111 generates the phase rotation sequence as described in the first through fifth embodiments. When the scrambling codes are used in the fourth embodiment, for example, the sequence generating unit 111 generates a scrambling code for each sector group. The orthogonal sequence multiplying unit 113 applies the amount of phase rotation corresponding to the sector to each pilot channel. The scrambling code multiplying unit 115 multiplies each pilot channel with the scrambling code corresponding to the sector.

The IFFT unit 117 performs Inverse Fast Fourier Transform on the transmission signal to modulate the signal according to the OFDM scheme, which forms an effective symbol. The guard interval inserting unit 119 extracts a part of the effective symbol and adds the extracted part to the beginning or end of the effective symbol, thereby forming a transmission symbol (transmission signal).

[Structure of Mobile Station]

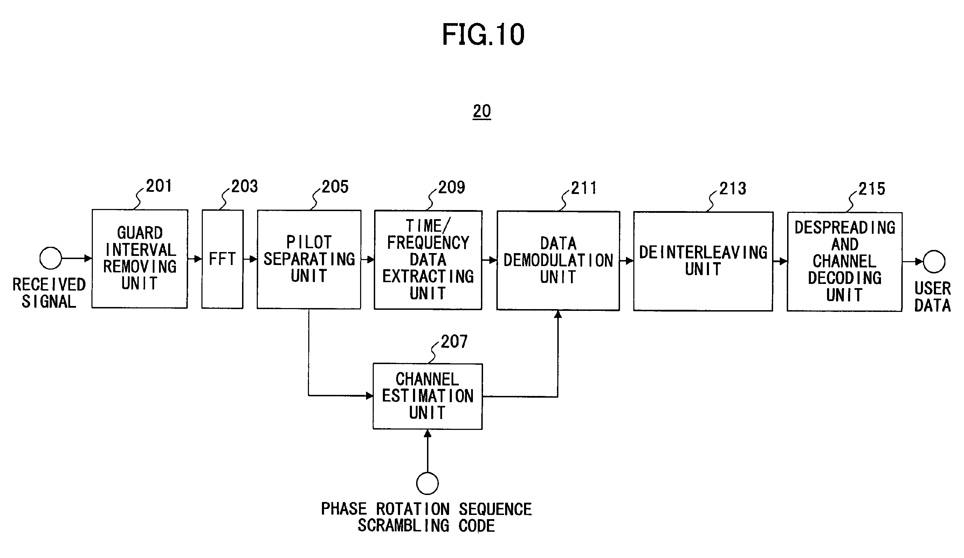

Fig. 10 shows an example structure of a mobile station 20 for implementing one of the aforementioned embodiments. The mobile station 20 includes a guard interval removing unit 201, an FFT (Fast Fourier Transform) unit 203, a pilot separating unit 205, a channel estimation unit 207, a time/frequency data extracting unit 209, a data demoduation unit 211, a deinterleaving unit 213, and a despreading and channel decoding unit 215.

The guard interval removing unit 201 removes the guard interval from the received symbol (received signal) and extracts the effective symbol. The FFT unit 203 performs Fast Fourier Transform on the signal to demodulate the signal according to the OFDM scheme. The pilot separating unit 205 separates every sub-carrier demodulated according to the OFDM scheme into the pilot channels and other channels.

The channel estimation unit 207 extracts the pilot channels using the phase rotation sequence and the scrambling code, performs channel estimation, and outputs a control signal for channel compensation to the data demodulation unit 211 or the like. The phase rotation sequence and the scrambling code should be the same as those used by the base station. For this reason, the mobile station 20 may detect the phase rotation sequence and the scrambling code during cell search or receive them from the base station on the broadcast channel.

The time/frequency data extracting unit 209 extracts the data channels in accordance with the mapping rule determined by the transmitter and outputs the extracted data channels. The data demodulation unit 211 performs channel compensation and demodulation on the data channels. The demodulation scheme is selected in a manner consistent with the modulation scheme used by the transmitter. The deinterleaving unit 213 changes the order of the symbols in a manner consistent with the interleaving performed by the transmitter. The despreading and channel coding unit 215 performs channel decoding on the received data channels. Since the OFDM scheme is employed in this example, code despreading is not performed. However, when the OFCDM scheme is employed in other examples, the despreading and channel decoding unit 215 performs both code despreading and channel decoding on the received data channels.

Although the first through fifth embodiments mainly focus on a six-sector configuration, the present invention is applicable to any case where the number of sectors is greater than or equal to four (N>=4).

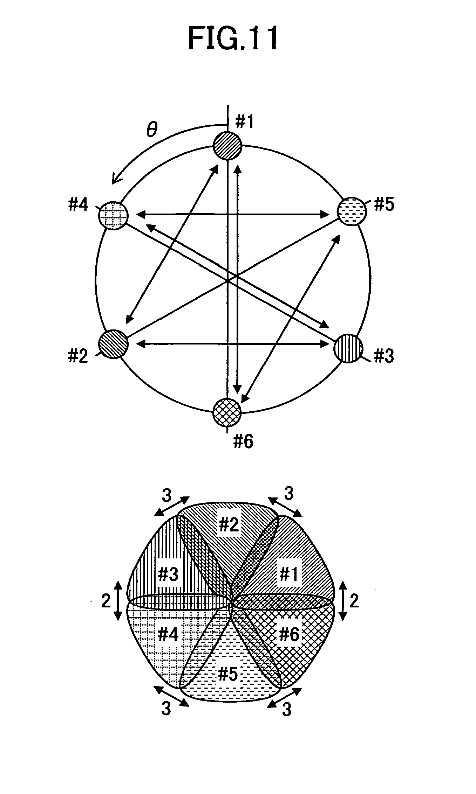

For example, Fig. 11 shows the relationship between sectors and the amount of phase rotation in accordance with the first embodiment. As described above, the amount of phase rotation in the sector #2 relative to that of the sector #1 is equal to $2\pi/3$ and the amount of phase rotation in the sector #6 relative to that of the sector #1 is equal to $\pi$. Accordingly, orthogonalization between the sector #1 and the sector #2 can be achieved with the spreading factor of three and orthogonalization between the sector #1 and the sector #6 can be achieve with the spreading factor of two.

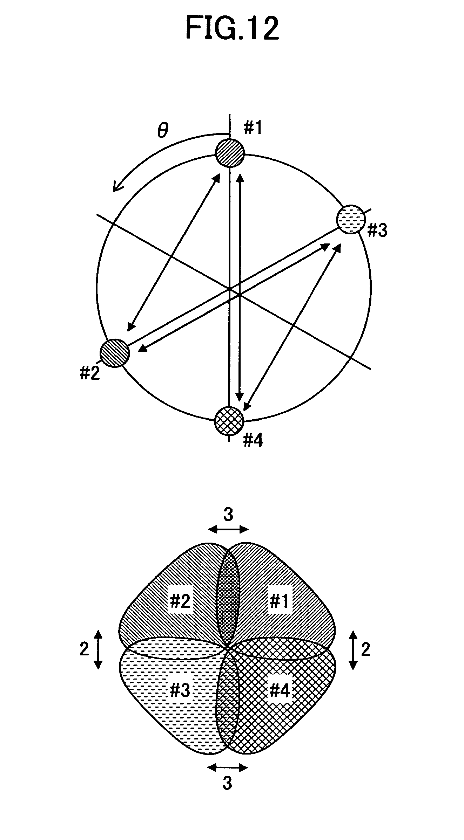

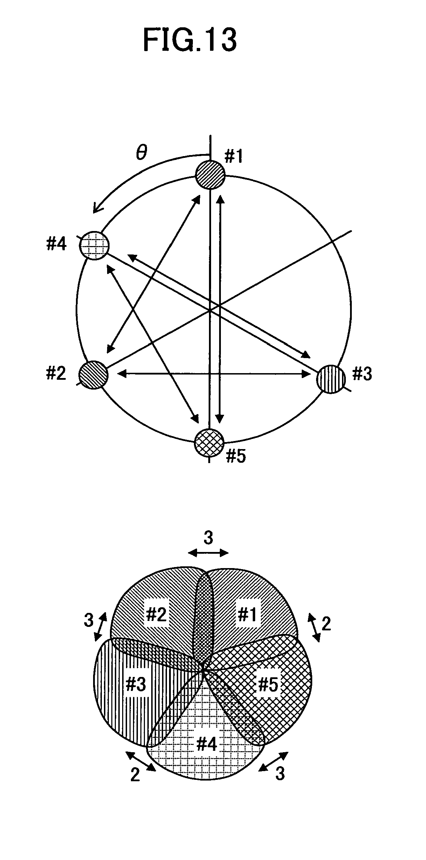

Fig. 12 shows the phase relationship for achieving orthogonalization among four sectors. With the use of the amount of phase rotation in Fig. 12, orthogonalization between the sector #1 and the sector #2 can be achieved with the spreading factor of three and orthogonalization between the sector #1 and the sector #4 can be achieve with the spreading factor of two. Similarly, with the use of the amount of phase rotation in Fig. 13, orthogonalization among five sectors can be achieved. This approach can be used in the presence of hotspot cells within the coverage of the base station.

As described above, according to the embodiments of the present invention, it is possible to reduce effects of frequency selective fading and reduce intersector interference of the pilot channels, when a base station supports greater than or equal to four sectors.

This international patent application is based on Japanese Priority Application No. 2006-225917 filed on August 22, 2006, the entire contents of which are incorporated herein by reference.

## Claims

1. A base station for generating pilot channels which are orthogonal among N (N>=4) sectors, comprising:

   a sequence generating unit configured to generate a phase rotation sequence which specifies the amount of phase rotation for each sector in a frequency domain such that there is more than $2\pi/N$ difference between the amount of phase rotation applied in each sector and that applied in its adjacent sectors; and
   an orthogonal sequence multiplying unit configured to apply the corresonding amount of phase rotation in the frequency domain, which is selected from the phase rotation sequence, to one of the pilot channels in each sector.

2. The base station as claimed in Claim 1, wherein:

   the sequence generating unit generates a phase rotation sequence which specifies the amount of phase rotation in the frequency domain and the amount of phase rotation in a time domain, and
   the orthogonal sequence multiplying unit further applies the corresponding amount of phase rotation in the time domain, which is selected from the phase rotation sequence, to one of the pilot channels in each sector.

3. The base station as claimed in Claim 1, wherein:

   the sequence generating unit generates the phase rotation sequence such that the amount of phase rotation applied in each sector is different from that applied in its adjacent sectors.

4. The base station as claimed in Claim 1, wherein:

   the sequence generating unit groups the sectors and further generates a scrambling code which differs from one group to another, and
   the base station further comprises a scrambling code multiplying unit configured to multiply the pilot channels with the scrambling code.

5. The base station as claimed in Claim 1, further comprising:

a pilot multiplexing unit configured to group the sectors and multiplex the pilot channels into a resource block which differs from one group to another.

6. A mobile station for receiving a signal on a pilot channel from a base station with N (N>=4) sectors; comprising:

a channel estimating unit configured to perform channel estimation using a phase rotation sequence which specifies the amount of phase rotation in a frequency domain such that there is more than $2\pi/N$ difference between the amount of phase rotation applied in each sector and that applied in its adjacent sectors.

7. A method of generating pilot channels which are orthogonal among N (N>=4) sectors in a base station with the N sectors, comprising the steps of:

generating a phase rotation sequence which specifies the amount of phase rotation for each sector in a frequency domain such that there is more than $2\pi/N$ difference between the amount of phase rotation applied in each sector and that applied in its adjacent sectors; and applying the corresonding amount of phase rotation in the frequency domain, which is selected from the phase rotation sequence, to one of the pilot channels in each sector.

# FIG.1

#2 #1

#3

# FIG.2

EP 2 056 615 A1

# FIG.3

THE NUMBER OF SYMBOLS REQUIRED FOR
ORTHOGONALIZATION AMONG 3 SECTORS
(SPREADING FACTOR)

POWER

THE NUMBER OF SYMBOLS REQUIRED FOR
ORTHOGONALIZATION AMONG 6 SECTORS
(SPREADING FACTOR)

FREQUENCY

EP 2 056 615 A1

# FIG.4A

6 SUBCARRIERS

FREQUENCY

SUBFRAME

SUBFRAME

TIME

EP 2 056 615 A1

# FIG.4B

# FIG.5A

FREQUENCY

6 SUBCARRIERS

SUBFRAME

SUBFRAME

TIME

EP 2 056 615 A1

# FIG.5B

# FIG.6A

6 SUBCARRIERS

FREQUENCY

SUBFRAME

SUBFRAME

TIME

EP 2 056 615 A1

# FIG.6B

# FIG.7A

6 SUBCARRIERS

FREQUENCY

SUBFRAME

SUBFRAME

TIME

EP 2 056 615 A1

EP 2 056 615 A1

# FIG.7B

19

## FIG.8A

# FIG.8B

# FIG.9

EP 2 056 615 A1

10

SECTOR #N

SECTOR #1

PILOT CHANNEL

101 — SPREADING AND CHANNEL CODING UNIT

103 — INTER-LEAVING UNIT

105 — DATA MODU-LATION UNIT

107 — TIME/ FREQUENCY MAPPING UNIT

109 — PILOT MULTI-PLEXING UNIT

113 — ORTHOGONAL SEQUENCE MULTI-PLYING UNIT

115 — SCRAMBLING CODE MULTI-PLYING UNIT

117 — IFFT

119 — GUARD INTERVAL INSERTING UNIT

USER DATA

TRANS-MISSION SIGNAL

111 — SEQUENCE GENERATING UNIT

# FIG.10

20

GUARD INTERVAL REMOVING UNIT ~201

FFT ~203

PILOT SEPARATING UNIT ~205

TIME/ FREQUENCY DATA EXTRACTING UNIT ~209

DATA DEMODULATION UNIT ~211

DEINTERLEAVING UNIT ~213

DESPREADING AND CHANNEL DECODING UNIT ~215

RECEIVED SIGNAL

USER DATA

CHANNEL ESTIMATION UNIT ~207

PHASE ROTATION SEQUENCE SCRAMBLING CODE

EP 2 056 615 A1

# FIG.11

# FIG.12

# FIG.13

# FIG.14

## INTERNATIONAL SEARCH REPORT

| | International application No. |
|---|---|
| | PCT/JP2007/065825 |

A.   CLASSIFICATION OF SUBJECT MATTER
*H04Q7/38*(2006.01)i, *H04B1/707*(2006.01)i, *H04J1/00*(2006.01)i, *H04J11/00* (2006.01)i

According to International Patent Classification (IPC) or to both national classification and IPC

B.   FIELDS SEARCHED

Minimum documentation searched (classification system followed by classification symbols)
H04Q7/38, H04B1/707, H04J1/00, H04J11/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | Yoshihisa KISHIYAMA, Akihito MORIMOTO, Ken'ichi HIGUCHI, Mamoru SAWAHASHI, "OFDM o Mochiiru Evolved UTRA Kudari Link ni Okeru Sector-kan Chokko Pilot Channel no Multi Cell Kankyo ni Okeru Throughput Tokusei", IEICE Technical Report, 12 July, 2006 (12.07.06), Vol.106, No.168, pages 257 to 262 | 1-7 |
| A | NTT DoCoMo, Orthogonal Pilot Channel Structure in E-UTRA Downlink, 3GPP TSG-RAN WG1 LTE Ad Hoc Meeting, R1-060031, 2006.01.25, pp.1-11 | 1-7 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 November, 2007 (01.11.07) | 13 November, 2007 (13.11.07) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
|---|
| PCT/JP2007/065825 |

C (Continuation).   DOCUMENTS CONSIDERED TO BE RELEVANT

| Category* | Citation of document, with indication, where appropriate, of the relevant passages | Relevant to claim No. |
|---|---|---|
| A | Yoshihisa KISHIYAMA, Ken'ichi HIGUCHI, Mamoru SAWAHASHI, "Evolved UTRA Kudari Link OFDM Musen Access ni Okeru Chokko Pilot Channel no Teian to Musen Link Tokusei", IEICE Technical Report, 15 June, 2006 (15.06.06), Vol.106, No.119, pages 7 to 12 | 1-7 |
| A | WO 2003/061170 A1  (Fujitsu Ltd.), 24 July, 2003 (24.07.03), Full text; all drawings & AU 2002219573 A1      & EP 1467508 A1 & US 2004/0252629 A1    & CN 1613218 A & JP 3914203 B2 | 1-7 |
| A | WO 2004/064295 A2  (Qualcomm Inc.), 29 July, 2004 (29.07.04), Full text; all drawings & US 2004/0131007 A1     & AU 2004204911 A1 & EP 1582042 A2          & BR 200406644 A & TW 200421766 A          & MX 2005007428 A1 & CN 1751489 A            & KR 2005091072 A | 1-7 |
| A | JP 2003-023675 A  (Noriyoshi KUROYANAGI), 24 January, 2003 (24.01.03), Full text; all drawings & WO 2003/005757 A1 | 1-7 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006225917 A

**Non-patent literature cited in the description**

- W-CDMA MOBILE COMMUNICATIONS SYSTEM. 15 March 2002, 100-101